(19)

Europäisches
Patentamt
European
Patent Office
Office européen
des brevets

(11) **EP 3 253 130 A1**

(12) **EUROPEAN PATENT APPLICATION**
published in accordance with Art. 153(4) EPC

(43) Date of publication:
**06.12.2017 Bulletin 2017/49**

(21) Application number: **16758964.7**

(22) Date of filing: **02.03.2016**

(51) Int Cl.:
**H04W 52/02** *(2009.01)* **H04W 68/00** *(2009.01)*

(86) International application number:
**PCT/JP2016/056437**

(87) International publication number:
**WO 2016/140271 (09.09.2016 Gazette 2016/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **03.03.2015 JP 2015041865**

(71) Applicant: **Kyocera Corporation Kyoto 612-8501 (JP)**

(72) Inventors:
• **NAGASAKA, Yushi**
  **Kyoto-shi, Kyoto 612-8501 (JP)**
• **FUJISHIRO, Masato**
  **Kyoto-shi, Kyoto 612-8501 (JP)**

(74) Representative: **Schwabe - Sandmair - Marx Patentanwälte Rechtsanwalt Partnerschaft mbB Joseph-Wild-Straße 20 81829 München (DE)**

(54) **BASE STATION, WIRELESS TERMINAL, AND NETWORK DEVICE**

(57) A base station comprises: a controller configured to execute a process of broadcasting, to a user terminal, a system information block (SIB) including an extended system frame number incremented by 1 when a system frame number (SFN) is returned to an initial value after reaching a maximum value. The extended system frame number is used by a user terminal that has received the system information block to identify, in an idle state, a paging frame including a timing at which a paging is monitored by an extended DRX (eDRX).

FIG. 9

## Description

### TECHNICAL FIELD

The present invention relates to a base station, a radio terminal, and a network apparatus in a mobile communication system.

### BACKGROUND ART

In 3GPP (3rd Generation Partnership Project), which is a project aiming to standardize a mobile communication system, a discontinuous reception (DRX) is defined as an intermittent reception technique to reduce power consumption of a radio terminal. The radio terminal executing a DRX operation intermittently monitors a downlink control channel. A cycle in which the downlink control channel is monitored is referred to as "DRX cycle".

The radio terminal and a base station determines, based on a system frame number (SFN) and the DRX cycle, a paging frame (PF) that may include the monitored downlink control channel. The base station transmits, in the determined paging frame, a downlink control channel for notifying a paging message addressed to the radio terminal, and the radio terminal monitors the downlink control channel in the paging frame.

In recent years, machine-type communication (MTC) in which a radio terminal performs communication without human intervention in a mobile communication system has attracted attention. From such a background, it has been discussed a new introduction of an extended DRX cycle longer than a conventional DRX cycle to further reduce power consumption (for example, see Non Patent Document 1). The DRX using the extended DRX cycle is referred to as an extended DRX.

### PRIOR ART DOCUMENT

### NON-PATENT DOCUMENT

Non Patent Document 1: 3GPP contribution "RP-141994"

### SUMMARY OF THE INVENTION

A base station according to a first aspect comprises: a controller configured to determine, based on a system frame number and a DRX cycle, a paging frame for notifying a paging message addressed to a radio terminal. The system frame number is counted up each time a radio frame passes, and reset to zero at a predetermined value. The controller manages a value indicating a number of times that the system frame number reaches the predetermined value. The controller determines the paging frame, based further on the value indicating the number of times.

A radio terminal according to a second aspect comprises: a controller configured to determine, based on a system frame number and a DRX cycle, a paging frame. The system frame number is counted up each time a radio frame passes, and reset to zero at a predetermined value. The controller manages a value indicating a number of times that the system frame number reaches the predetermined value. The controller determines the paging frame, based further on the value indicating the number of times.

A network apparatus according to a third aspect is an upper node of a base station configured to manage a cell belonging to a predetermined tracking area. The network apparatus comprises: a controller configured to determine, based on a system frame number and a DRX cycle, a paging frame. The system frame number is counted up each time a radio frame passes, and reset to zero at a predetermined value. The controller notifies a radio terminal existing in the cell, of configuration information on a configuration of the DRX cycle. The configuration information includes a value indicating a number of times that the system frame number reaches the predetermined value. The controller notifies the base station of the configuration information and an identifier indicating the radio terminal.

A base station according to a forth aspect comprises: a controller configured to execute a process of broadcasting, to a user terminal, a system information block (SIB) including an extended system frame number incremented by 1 when a system frame number (SFN) is returned to an initial value after reaching a maximum value. The extended system frame number is used by a user terminal that has received the system information block to identify, in an idle state, a paging frame including a timing at which a paging is monitored by an extended DRX (eDRX).

A node according to a fifth aspect comprises a controller configured to execute a process of transmitting a paging to a base station. The paging includes an extended DRX paging cycle indicating a timing at which a user terminal for which an extended DRX is configured monitors a paging transmitted from the base station. The extended DRX paging cycle is notified also to the user terminal.

A base station according to a sixth aspect comprises: a controller configured to execute a process of receiving a paging from an upper node. The paging includes an extended DRX paging cycle indicating a timing at which a user terminal for which an extended DRX is configured monitors a paging transmitted from the base station. The extended DRX paging cycle is notified also to the user terminal. The controller transmits, based on the extended DRX paging cycle, a paging to the user terminal.

## BRIEF DESCRIPTION OF THE DRAWINGS

Fig. 1 is a configuration diagram of an LTE system.
Fig. 2 is a block diagram of a UE.
Fig. 3 is a block diagram of an eNB.
Fig. 4 is a block diagram of an MME.
Fig. 5 is a protocol stack diagram.
Fig. 6 is a configuration diagram of a radio frame.
Fig. 7 is a sequence diagram for describing an operation according to a first embodiment.
Fig. 8 is a diagram for describing an example of configuration information on an extended DRX configuration.
Fig. 9 is a sequence diagram for describing an operation according to a second embodiment.

## DESCRIPTION OF THE EMBODIMENT

[Overview of Embodiment]

In the current specification, a maximum value of a system frame number has been defined. Therefore, if an extended DRX cycle exceeding the maximum value of the system frame number is introduced, there is a concern that a paging frame cannot be appropriately determined, based on the extended DRX cycle.

Therefore, the embodiment provides a base station, a radio terminal, and a network apparatus in which the paging frame is capable of appropriately being determined, if an extended DRX cycle exceeding a maximum value of a conventional system frame number is defined.

A base station according to a first and a second embodiment comprises: a controller configured to determine, based on a system frame number and a DRX cycle, a paging frame for notifying a paging message addressed to a radio terminal. The system frame number is counted up each time a radio frame passes, and reset to zero at a predetermined value. The controller manages a value indicating a number of times that the system frame number reaches the predetermined value. The controller determines the paging frame, based further on the value indicating the number of times.

In a first and a second embodiment, the controller determines the paging frame, based on an extended system frame number defined by the value indicating the number of times and the system frame number, and the DRX cycle.

The base station according to a first embodiment further comprises: a transmitter configured to transmit, by broadcast, the value indicting the number of times to a radio terminal.

The base station according to a second embodiment further comprises: a receiver configured to receive configuration information on a configuration of the DRX cycle notified from an upper node to a radio terminal and an identifier indicating the radio terminal, from the upper node. The configuration information includes the value indicating the number of times. The controller determines, based on the value indicating the number of times received from the upper node, a paging frame for notifying a paging message addressed to the radio terminal.

The base station according to another embodiment further comprises: a receiver configured to receive, from a radio terminal, a check request for checking a value indicating the number of times managed by the radio terminal; and a transmitter configured to transmit, to the radio terminal, a response for checking, by the radio terminal, the value indicting the number of times.

A radio terminal according to a first and a second embodiment comprises: a controller configured to determine, based on a system frame number and a DRX cycle, a paging frame. The system frame number is counted up each time a radio frame passes, and reset to zero at a predetermined value. The controller manages a value indicating a number of times that the system frame number reaches the predetermined value. The controller determines the paging frame, based further on the value indicating the number of times.

In a first and a second embodiment, the controller determines the paging frame, based on an extended system frame number defined by the value indicating the number of times and the system frame number, and the DRX cycle.

The radio terminal according to a first embodiment further comprises: a receiver configured to receive the value indicting the number of times by broadcast from a base station.

The radio terminal according to a second embodiment further comprises: a receiver configured to receive, from an upper node, by a NAS message, configuration information on a configuration of the DRX cycle. The configuration information includes the value indicating the number of times.

The radio terminal according to another embodiment further comprises: a transmitter configured to transmit, to a base station, a check request for checking a value indicating the number of times managed by the radio terminal; and a receiver configured to receive, from the base station, a response for checking, by the radio terminal, the value indicting the number of times.

A network apparatus according to a second embodiment is an upper node of a base station configured to manage a cell belonging to a predetermined tracking area. The network apparatus comprises: a controller configured to determine, based on a system frame number and a DRX cycle, a paging frame. The system frame number is counted up each time a radio frame passes, and reset to zero at a predetermined value. The controller notifies a radio terminal existing in the cell, of configuration information on a configuration of the DRX cycle. The configuration information includes a value indicating a number of times that the system frame number reaches the predetermined value. The controller notifies the base station of the configuration information and an identifier indicating the radio terminal.

[First Embodiment]

Hereinafter, the embodiment in a case where the present invention is applied to an LTE system will be described.

(System Configuration)

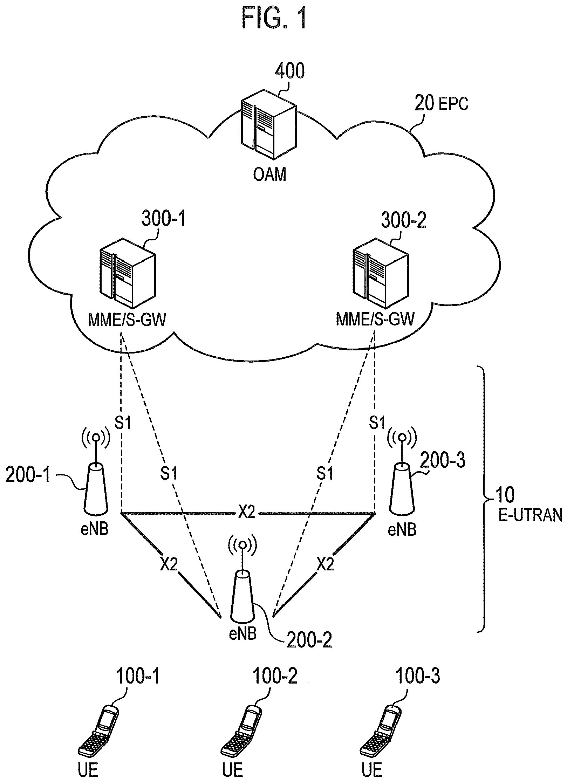

Fig. 1 is a configuration diagram of an LTE system. As shown in Fig. 1, the LTE system according to the embodiment comprises UEs (User Equipments) 100, E-UTRAN (Evolved Universal Terrestrial Radio Access Network) 10, and EPC (Evolved Packet Core) 20.

The UE 100 corresponds to a radio terminal. The UE 100 is a mobile communication device and performs radio communication with a connected cell (a serving cell). Configuration of the UE 100 will be described later.

The E-UTRAN 10 corresponds to a radio access network. The E-UTRAN 10 comprises eNBs 200 (evolved Node-Bs). The eNB 200 corresponds to a base station. The eNBs 200 are connected mutually via an X2 interface. Configuration of the eNB 200 will be described later.

The eNB 200 manages a cell or a plurality of cells and performs radio communication with the UE 100 that establishes a connection with the cell of the eNB 200. The eNB 200, for example, has a radio resource management (RRM) function, a function of routing user data, and a measurement control function for mobility control and scheduling. It is noted that the "cell" is used as a term indicating a minimum unit of a radio communication area, and is also used as a term indicating a function of performing radio communication with the UE 100.

The EPC 20 corresponds to a core network. A network of the LTE system (a LTE network) is configured by the E-UTRAN 10 and the EPC 20. The EPC 20 comprises MME (Mobility Management Entity)/S-GW (Serving-Gateway) 300, and an OAM (Operation and Maintenance) 400. The MME performs various mobility controls and the like, for the UE 100. The S-GW performs control to transfer user data. The MME/S-GW 300 is connected to the eNB 200 via an S1 interface.

The OAM 400 is a server apparatus managed by an operator and performs maintenance and monitoring of the E-UTRAN 10.

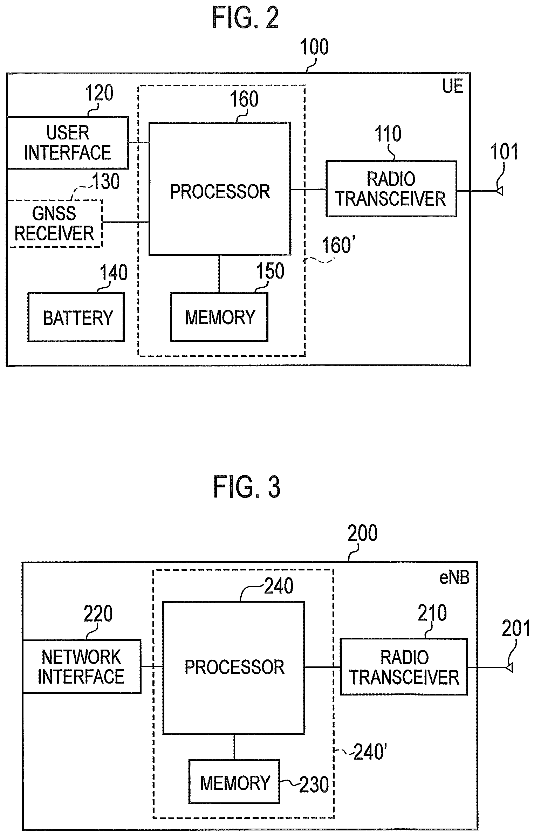

Fig. 2 is a block diagram of the UE 100. As shown in Fig. 2, the UE 100 comprises an antenna 101, a radio transceiver 110, a user interface 120, GNSS (Global Navigation Satellite System) receiver 130, a battery 140, a memory 150, and a processor 160. The memory 150 corresponds to a storage unit, and the processor 160 corresponds to a controller. The UE 100 may not have the GNSS receiver 130. Furthermore, the memory 150 may be integrally formed with the processor 160, and this set (that is, a chip set) may be a processor 160'.

The antenna 101 and the radio transceiver 110 are used to transmit and receive a radio signal. The radio transceiver 110 converts a baseband signal (a transmission signal) output from the processor 160 into the radio signal, and transmits the radio signal from the antenna 101. Furthermore, the radio transceiver 110 converts a radio signal (a reception signal) received by the antenna 101 into the baseband signal, and outputs the baseband signal to the processor 160.

The user interface 120 is an interface with a user carrying the UE 100, and comprises, for example, a display, a microphone, a speaker, various buttons and the like. The user interface 120 receives an operation from a user and outputs a signal indicating the content of the operation to the processor 160. The GNSS receiver 130 receives a GNSS signal in order to obtain location information indicating a geographical location of the UE 100, and outputs the received signal to the processor 160. The battery 140 accumulates a power supplied to each block of the UE 100.

The memory 150 stores a program to be executed by the processor 160 and information to be used for a process by the processor 160. The processor 160 includes a baseband processor that performs modulation and demodulation, encoding and decoding and the like on the baseband signal, and a CPU (Central Processing Unit) that performs various processes by executing the program stored in the memory 150. The processor 160 may further include a codec that performs encoding and decoding on sound and video signals. The processor 160 executes various processes and various communication protocols described later.

Fig. 3 is a block diagram of the eNB 200. As shown in Fig. 3, the eNB 200 comprises an antenna 201, a radio transceiver 210, a network interface 220, a memory 230, and a processor 240. It is note that the memory 230 may be integrated with the processor 240, and this set (that is, a chipset) may be a processor 240'.

The antenna 201 and the radio transceiver 210 are used to transmit and receive a radio signal. The radio transceiver 210 converts a baseband signal (a transmission signal) output from the processor 240 into the radio signal, and transmits the radio signal from the antenna 201. Furthermore, the radio transceiver 210 converts a radio signal (a reception signal) received by the antenna 201 into the baseband signal, and outputs the baseband signal to the processor 240.

The network interface 220 is connected to the neighbor eNB 200 via the X2 interface and is connected to the MME/S-GW 300 via the S1 interface. The network interface 220 is used in communication performed on the X2 interface and communication performed on the S1 interface.

The memory 230 stores a program to be executed by the processor 240 and information to be used for a process by the processor 240. The processor 240 includes the baseband processor that performs modulation and demodulation, encoding and decoding and the like on the baseband signal and a CPU that performs various processes by executing the program stored in the memory 230. The processor 240 executes various processes and various communication protocols described later.

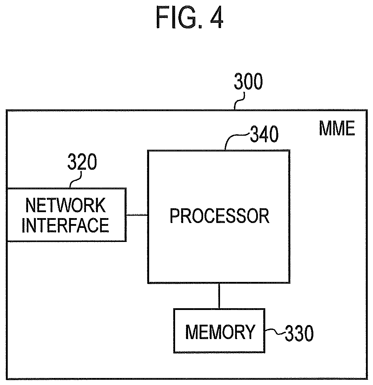

Fig. 4 is a block diagram of the MME 300. As shown in Fig. 4, the MME 300 comprises a network interface 320, a memory 330, and a processor 340. It is note that the memory 330 may be integrated with the processor 340, and this set (that is, a chipset) may be a processor.

The network interface 320 is connected to the eNB 200 via the S1 interface. The network interface 320 is used in communication performed on the S1 interface.

The memory 330 stores a program to be executed by the processor 340 and information to be used for a process by the processor 340. The processor 340 includes the baseband processor that performs modulation and demodulation, encoding and decoding and the like on the baseband signal and a CPU that performs various processes by executing the program stored in the memory 330. The processor 340 executes various processes and various communication protocols described later.

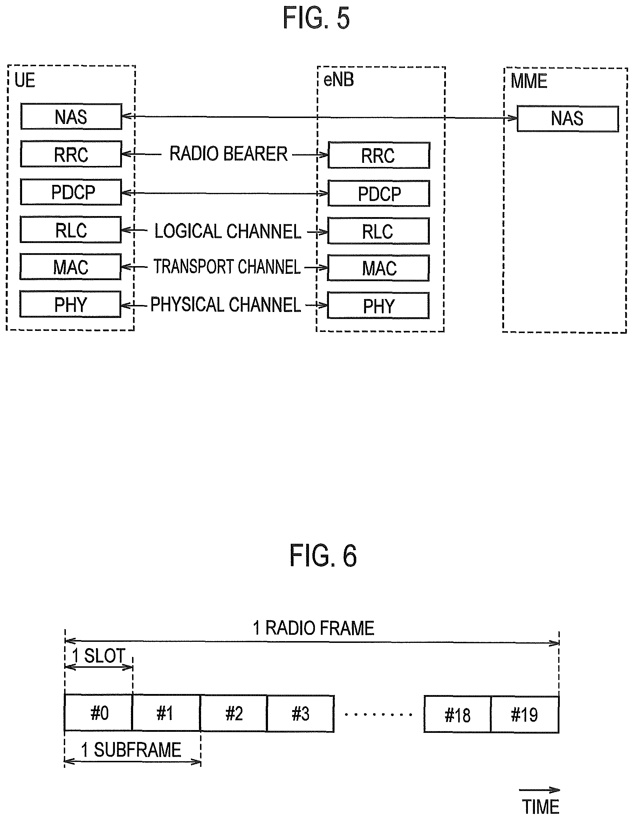

Fig. 5 is a protocol stack diagram of a radio interface in the LTE system. As shown in Fig. 5, the radio interface protocol is classified into a layer 1 to a layer 3 of an OSI reference model, wherein the layer 1 is a physical (PHY) layer. The layer 2 includes MAC (Medium Access Control) layer, RLC (Radio Link Control) layer, and PDCP (Packet Data Convergence Protocol) layer. The layer 3 includes RRC (Radio Resource Control) layer.

The PHY layer performs encoding and decoding, modulation and demodulation, antenna mapping and demapping, and resource mapping and demapping. Between the PHY layer of the UE 100 and the PHY layer of the eNB 200, user data and a control signal are transmitted through the physical channel.

The MAC layer performs priority control of data, and a retransmission process and the like by hybrid ARQ (HARQ). Between the MAC layer of the UE 100 and the MAC layer of the eNB 200, user data and a control signal are transmitted via a transport channel. The MAC layer of the eNB 200 includes a scheduler to decide (schedule) a transport format of an uplink and a downlink (a transport block size, a modulation and coding scheme) and an allocated resource block to the UE 100.

The RLC layer transmits data to an RLC layer of a reception side by using the functions of the MAC layer and the PHY layer. Between the RLC layer of the UE 100 and the RLC layer of the eNB 200, user data and a control signal are transmitted via a logical channel.

The PDCP layer performs header compression and decompression, and cipher and decipher.

The RRC layer is defined only in a control plane handling a control signal. Between the RRC layer of the UE 100 and the RRC layer of the eNB 200, a control signal (an RRC message) for various types of setting is transmitted. The RRC layer controls the logical channel, the transport channel, and the physical channel in response to establishment, re-establishment, and release of a radio bearer. When a connection (an RRC connection) is established between the RRC of the UE 100 and the RRC of the eNB 200, the UE 100 is in an RRC connected mode (a connected mode), and when the connection is not established, the UE 100 is in an RRC idle mode (an idle mode).

NAS (Non-Access Stratum) layer positioned above the RRC layer performs session management, mobility management and the like.

Fig. 6 is a configuration diagram of a radio frame used in the LTE system. In the LTE system, OFDMA (Orthogonal Frequency Division Multiple Access) is employed in a downlink (DL), and SC-FDMA (Single Carrier Frequency Division Multiple Access) is employed in an uplink (UL), respectively.

As shown in Fig. 6, the radio frame is configured by 10 subframes arranged in a time direction. Each subframe is configured by two slots arranged in the time direction. Each subframe has a length of 1 ms and each slot has a length of 0.5 ms. Each subframe includes a plurality of resource blocks (RBs) in a frequency direction, and a plurality of symbols in the time direction. Each resource block includes a plurality of subcarriers in the frequency direction. A resource element is configured by one subcarrier and one symbol. Among radio resources allocated to the UE 100, a frequency resource is configured by a resource block and a time resource is configured by a subframe (or slot).

(Summary of DRX operation in idle mode)

A discontinuous reception (DRX) operation in the RRC idle mode will be described, below.

The UE 100 is capable of performing the DRX operation to conserve a battery. The UE 100 configured to perform the DRX operation intermittently monitors a PDCCH. Normally, the PDCCH in a subframe carries scheduling information (information on a radio resource and a transport format) of a PDSCH in the subframe.

The UE 100 in the RRC idle mode performs a DRX operation for intermittently monitoring the PDCCH to receive a paging message for notifying that there is an incoming call. The UE 100 uses a group identifier (P-RNTI) for paging to decode the PDCCH (CCE) to obtain assignment information of a paging channel (PI). The UE 100 obtains the paging message, based on the assignment information. A PDCCH monitoring timing in the UE 100 is determined, based on an identifier (International Mobile Subscriber Identity (IMSI)) of the UE 100. A calculation of the PDCCH monitoring timing will be specifically described.

The PDCCH monitoring timing in the DRX operation in the RRC idle mode (PDCCH monitoring subframe) is referred to as "Paging Occasion (PO)".

The UE 100 (and the eNB 200) calculates the Paging Occasion (PO) and a Paging Frame (PF) which is a radio frame that may include the Paging Occasion, as follows.

A system frame number (SFN) of the PF is evaluated from the following formula (1).

$$\text{SFN mod } T = (T \text{ div } N) * (UE\_ID \text{ mod } N) \dots (1)$$

Here, T is a DRX cycle of the UE 100 for receiving the paging message, and is represented by the number of radio frames. N is a minimum value out of T and nB. nB is a value selected from 4T, 2T, T, T/2, T/4, T/8, T/16, and T/32. UE_ID is a value evaluated by "IMSI mod 1024".

Of the PFs evaluated in this manner, a subframe number of the PO is evaluated as follows. First, index i_s is evaluated by the following formula (2).

$$i\_s = \text{floor } (UE\_ID/N) \text{ mod } Ns \dots (2)$$

Here, Ns is a maximum value out of 1 and nB/T.

Next, Ns and the PO corresponding to the index i_s are evaluated from Table 1 or Table 2. Table 1 is applied to an LTE FDD system, and Table 2 is applied to an LTE TDD system. In Table 1 and Table 2, N/A represents not applicable.

[Table 1]

| Ns | PO when i_s=0 | PO when i_s=1 | PO when i_s=2 | PO when i_s=3 |
|----|---------------|---------------|---------------|---------------|
| 1  | 9             | N/A           | N/A           | N/A           |
| 2  | 4             | 9             | N/A           | N/A           |
| 4  | 0             | 4             | 5             | 9             |

[Table 2]

| Ns | PO when i_s=0 | PO when i_s=1 | PO when i_s=2 | PO when i_s=3 |
|----|---------------|---------------|---------------|---------------|
| 1  | 0             | N/A           | N/A           | N/A           |
| 2  | 0             | 5             | N/A           | N/A           |
| 4  | 0             | 1             | 5             | 6             |

In this manner, the UE 100 determines the paging frame, based on the SFN and the DRX cycle. It is noted that the eNB 200 similarly determines a paging frame, and transmits, in the determined paging frame, a PDCCH for notifying a paging message.

(Summary of extended system frame number)

Next, a summary of an extended system frame number will be described.

The system frame number (SFN) of the paging frame (PF) is determined by "SFN mod T = (T div N) * (UE_ID mod N) as in the above-described formula (1). At least in 3GPP Release 12 or earlier, the range of the SFN is 0, 1, 2, ..., 1023. Thus, a maximum value of the SFN is 1023, and a maximum value (maximum time) of the radio frame is 1024 (10.24 sec). Further, "SFN > T" is satisfied in the conventional DRX cycle (T). Therefore, the left side of the formula (1) is "SFN mod T", and thus, all SFNs are mapped to any one of values 0, 1, 2, ..., T-1.

On the other hand, if the extended DRX cycle (T) longer than the conventional DRX cycle and exceeding the conventional maximum value of the SFN is introduced, "SFN < T" may be possible. If "SFN < T", the left side of the formula (1) only becomes the "maximum value of the SFN". For example, if the extended DRX cycle (T) is 3000 [SFN], "1023 mod (3000) = 1023" is obtained. Therefore, if "SFN < T", the SFN is not appropriately mapped, and there is a concern that the UE 100 and the eNB 200 cannot appropriately determine the paging frame, based on the extended DRX cycle.

Therefore, as described below, a radio frame header (radioFrameHeader) is introduced to define the extended system frame number (extended SFN) that may take a larger value than the conventional SFN.

The SFN is counted up each time a radio frame passes, and reset to zero at a predetermined value (value exceeding a maximum value). The newly introduced radio frame header is a value indicating the number of times that the system frame number reaches the predetermined value. Therefore, if the SFN returns to a start after reaching the maximum value (if so-called "Wrap around" is executed), the radio frame header increases by "1" (incremented by "1").

As indicated below, a combination of the radio frame header and the SFN is interpreted as the extended system frame number (enhanced SFN).

[Table 3]

| (radioFrameHeader) and (SFN) | enhanced SFN |
| --- | --- |
| 0 and 0 | 0 |
| 0 and 1 | 1 |
| ... | ... |
| 0 and 1023 | 1023 |
| 1 and 0 | 1024 |
| 1 and 1 | 1025 |
| 1 and 2 | 1026 |
| ... | ... |
| 1 and 1023 | 2047 |
| 2 and 0 | 2048 |
| ... | ... |

The radio frame header takes a value of "0, 1, 2, ..." and resets to zero at a predetermined value (value exceeding a maximum value). A maximum value of the radio frame header is 8437, for example. A maximum value of the extended SFN in this case is 8438 (radioFrameHeader) × 1024 (SFN) = 8640512 that corresponds to about 24 hours (8640000).

(Operation according to first embodiment)

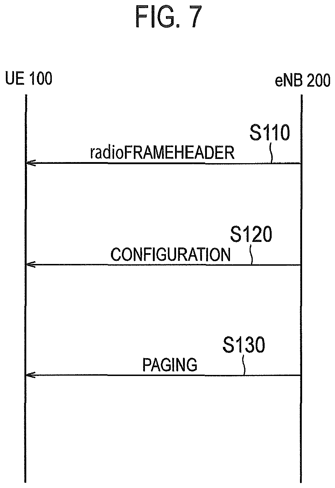

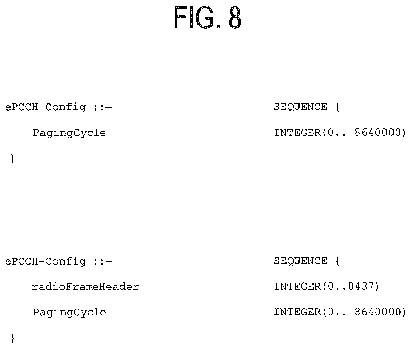

Next, an operation according to a first embodiment will be described with reference to Fig. 7 and Fig. 8. Fig. 7 is a sequence diagram for describing the operation according to the first embodiment. Fig. 8 is a diagram for describing an example of configuration information on an extended DRX configuration.

The UE 100 exists in a cell managed by the eNB 200. The UE 100 is in an idle mode. Alternatively, the UE 100 may be in a connected mode.

As illustrated in Fig. 7, in step S110, the eNB 200 transmits the radio frame header (radioFrameHeader) to the UE 100. Specifically, the eNB 200 transmits to the UE 100 the radio frame header managed in the eNB 200. The eNB 200 manages a radio frame header common to the UEs 100 of the eNB 200. Alternatively, the eNB 200 may manage a radio frame header for every UE 100. A value of the radio frame header transmitted to the UE 100 indicates a present value managed by the eNB 200.

The eNB 200 transmits the radio frame header to the UE 100. Specifically, the eNB 200 transmits the radio frame header by an RRC message (for example, RRCConnectionReconfiguration) by unicast. Alternatively, the eNB 200 may transmit the radio frame header by a master information block (MIB) or a system information block (SIB) by broadcast. Thus, the UE 100 can cyclically receive the radio frame header, and it is possible to decrease a situation where the values of the radio frame header between the eNB 200 remain shifted. It is noted that in response to a request from the UE 100, the eNB 200 may individually transmit the radio frame header to the UE 100. For example, the UE 100 may notify the eNB 200 of the request by a UE Assistance Information message.

The UE 100 stores and manages the received radio frame header in the memory 150. Specifically, the UE 100 stores the value of the radio frame header received from the eNB 200 and starts counting the radio frame header from the value. Thus, the radio frame headers of the UE 100 and the eNB 200 become equal in value.

In step S120, the eNB 200 transmits, to the UE 100, configuration information (Configuration) on a configuration of the extended DRX cycle in an idle mode. Specifically, the eNB 200 transmits configuration information of a paging control channel (PCCH) obtained by extending the PCCH (ePCCH configuration information (ePCCH-Config)) to the UE 100. The ePCCH configuration information is an information element different from the conventional PCCH configuration information (PCCH-Config).

As illustrated in Fig. 8, the ePCCH configuration information includes a paging cycle (PagingCycle) indicating a cycle in which to transmit, in the eNB 200, the PDCCH for notifying the paging message. The paging cycle included in the ePCCH configuration information may be a larger value than the conventional range. For example, as illustrated in Fig. 8, a maximum value of the paging cycle is 8640512 [radio frames]. It is noted that the ePCCH configuration information may include the radio frame header (see bottom of Fig. 8).

It is noted that the eNB 200 may transmit, as the configuration information on the configuration of the extended DRX cycle in the idle mode, the PCCH configuration information by broadcast (SIB2). In this case, the value range of the paging cycle is extended, so that a value larger than the conventional paging cycle can be configured.

The UE 100 receives the ePCCH configuration information from the eNB 200. The UE 100 configures the paging cycle as the DRX cycle (or an extended DRX cycle longer than the conventional DRX cycle), based on the ePCCH configuration information. Further, the UE 100 determines the paging frame, based on, in addition to the SFN and the DRX cycle, the radio frame header. Specifically, the UE 100 determines the paging frame, based on the extended SFN defined by the radio frame header and the SFN, and the DRX cycle. The UE 100 uses a parameter related to the above-described formula (1) to determine the paging frame. It is noted that the UE 100 obtains the related parameter from the eNB 200. Thereafter, in the idle mode, the UE 100 executes an extended DRX operation. The UE 100 monitors the PDCCH in the determined paging frame.

It is noted that if performing the configuration on the basis of the ePCCH configuration information, the UE 100 ignores the conventional PCCH configuration information even when receiving it. The UE 100 may discard the PCCH configuration information.

In step S130, the eNB 200 determines, similarly to the UE 100, the paging frame, the paging cycle as the DRX cycle. Each of the eNB 200 and the UE 100 is managed by counting the radio frame header, and thus, values of the extended SFN become the same. Therefore, the paging frames determined by the eNB 200 and the UE 100 are the same.

If receiving a paging from an upper node (MME 300), the eNB 200 transmits, in the determined paging frame, the PDCCH for notifying a paging message. The PDCCH is monitored in the determined paging frame, and thus, the UE 100 can receive the paging message from the eNB 200.

As described above, even if the extended DRX cycle longer than the conventional DRX cycle is introduced, the paging frame can be appropriately determined by using the extended SFN.

[Second Embodiment]

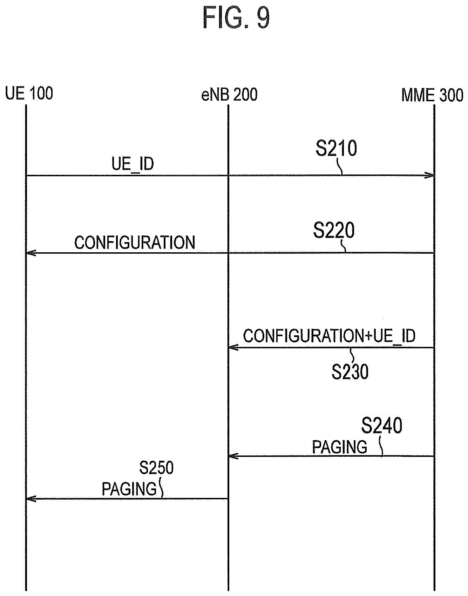

Next, a second embodiment will be described with reference to Fig. 9. Fig. 9 is a sequence diagram for describing an operation according to the second embodiment. It is noted that the same parts as those in the first embodiment will be omitted, where appropriate.

In the second embodiment, the MME 300 notifies the UE 100 of the configuration information (Configuration) on the configuration of the extended DRX cycle in the idle mode.

As illustrated in Fig. 9, in step S210, the UE 100 notifies the MME 300 of an identifier (UEID) of the UE 100 by a NAS message. Here, the UE 100 is a UE for only performing MTC. Alternatively, the UE 100 may be fixed, or a device, having low mobility, configured to perform only local movement.

In step S220, the MME 300 notifies the UE 100 of the configuration information (Configuration) on the configuration of the extended DRX cycle in the idle mode. The MME 300 notifies the configuration information by the NAS message.

The configuration information includes information indicating the extended DRX cycle. Further, the configuration information includes a value of the radio frame header for determining the paging frame based on the extended DRX cycle.

The UE 100 performs a configuration of the extended DRX in accordance with the configuration information. Further, the UE 100 starts counting from the value of the radio frame header and manages the radio frame header. The UE 100 determines the paging frame, in the same manner as in the first embodiment. Further, the UE 100 executes the extended DRX operation in the idle mode.

In step S230, the MME 300 notifies the eNB 200 of the configuration information notified to the UE 100 and the UEID indicating the UE 100. If the MME 300 knows the eNB 200 configured to manage the cell in which the UE 100 exists, the MME 300 notifies the eNB 200 of the configuration information and the UEID. Alternatively, the MME 300 may notify each eNB 200 configured to manage each cell belonging to a tracking area to which the cell in which the UE 100 exists belongs, of the configuration information and the UEID.

Here, the radio frame header included in the configuration information is a value that continues to be counted, and if the SFN was reset, the header is a value counted according to its number of times. Therefore, the value of the radio frame header at the time of notifying the eNB 200 and the value of the radio frame header at the time of notifying the UE 100 may differ.

The eNB 200 receives the configuration information and the UEID from the MME 300. The eNB 200 determines that the UE 100 indicated by the UEID may be configured with the extended DRX cycle included in the configuration information. Therefore, the eNB 200 uses the radio frame header included in the configuration information to determine the paging frame for notifying the paging message addressed to the UE 100.

In step S240, the MME 300 having received a paging from an upper node, notifies the eNB 200 of the paging. If the MME 300 knows the eNB 200 configured to manage the cell in which the UE 100 exist, to which the paging message is addressed, the MME 300 notifies the eNB 200 of the paging. Alternatively, the MME 300 may notify each eNB 200 configured to manage each cell belonging to the tracking area, of the paging.

It is noted that the MME 300 may include the configuration information and/or the UEID in step S230, into a message for notifying the paging.

In step S250, the eNB 200, having received the paging from the MME 300 that is an upper node, determines whether or not the address of the paging message matches the UE 100 indicated by the UEID received from the MME 300. If the address of the paging message matches the UE 100 indicated by the UEID received from the MME 300, the eNB 200 notifies the paging message in the paging frame determined by using the radio frame header included in the configuration information. Otherwise, the eNB 200 notifies the paging message as usual.

The UE 100, which uses the radio frame header notified by the MME 300 to the eNB 200 to determine the paging frame, monitors the same paging frame. Therefore, the UE 100 can receive the paging message from the eNB 200.

As described above, if the MME 300 notifies the UE 100 of the configuration information on the configuration of the extended DRX cycle in the idle mode, even if the extended DRX cycle longer than the conventional DRX cycle is introduced, the paging frame can be appropriately determined.

[Other Embodiments]

In the above-described embodiment, if the extended DRX cycle is configured, the UE 100 does not monitor the PDCCH for a long period, and thus, there is a possibility that the radio frame headers managed by the UE 100 and eNB 200 may be shifted.

Therefore, to suppress the occurrence of unalignment of the radio frame headers, the following methods can be executed.

In a first method, the UE 100 receives the value of the radio frame header transmitted by the eNB 200 by broadcast. The UE 100 updates the value of the radio frame header managed by the UE 100, to a value of the radio frame header received from the eNB 200. Alternatively, if the value of the radio frame header managed by the UE 100 and the value of the radio frame header received from the eNB 200 do not match, the UE 100 may update the value of the radio frame header managed by the UE 100 to the value of the radio frame header received from the eNB 200.

Thus, even in the idle mode, the UE 100 can receive the value of the radio frame header transmitted by the eNB 200, and thus, can confirm the radio frame header without consuming much power.

In a second method, the UE 100 transmits a check request to confirm the value of the radio frame header managed by the UE 100 to the eNB 200. The check request may include the value of the radio frame header managed by the UE 100.

For example, the UE 100 may transmit the check request, which is triggered when the radio frame header is reset to zero at a predetermined value (value exceeding the maximum value). In the idle mode, after transferring to the connected mode, the UE 100 transmits the check request by unicast by the RRC message.

The eNB 200 starts, in response to a reception of the check request, an operation for checking the value of the radio frame header of the UE 100 from which the check request is transmitted.

Specifically, the eNB 200 confirms whether or not the radio frame header included in the check request and the radio frame header managed by the eNB 200 match. If the radio frame headers do not match, the eNB 200 transmits, as a response to the check request, a message including the value of the radio frame header managed by the eNB 200, to the UE 100. If the radio frame headers match, the eNB 200 transmits a response with an indication that the radio frame header is normal, to the UE 100. Alternatively, even if the radio frame headers match, the eNB 200 may transmit, as a response, the message including the value of the radio frame header managed by the eNB 200, to the UE 100. Further, even if the check request does not include the value of the radio frame header managed by the UE 100, the eNB 200 may transmit the message including the value of the radio frame header managed by the eNB 200, to the UE 100.

If the value of the radio frame header managed by the eNB 200 is included in the response to the check request, the UE 100 updates the value of the radio frame header managed by the UE 100 to the value of the radio frame header included in the response. Alternatively, if the value of the radio frame header managed by the UE 100 and the value of the radio frame header included in the response do not match, the UE 100 may update the value of the radio frame header managed by the UE 100, to the value of the radio frame header included in the response. Further, if receiving from the eNB 200 a response with an indication that the radio frame header is normal, the UE 100 continues to execute the management of the radio frame header.

Thus, even if the eNB 200 does not transmit the value of the radio frame header by broadcast, the UE 100 can confirm the radio frame header.

In the above-described embodiment, as one example of a cellular communication system, the LTE system is described; however, the present invention is not limited to the LTE system, and the present invention may be applied to systems other than the LTE system.

[Cross Reference to Related Applications]

The entire content of Japanese Patent Application No. 2015-041865 (filed on March 3, 2015) is incorporated in the present specification by reference.

**INDUSTRIAL APPLICABILITY**

The present invention is useful in the field of communication.

**Claims**

1. A base station, comprising: a controller configured to execute a process of broadcasting, to a user terminal, a system information block (SIB) including an extended system frame number incremented by 1 when a system frame number (SFN) is returned to an initial value after reaching a maximum value, wherein
the extended system frame number is used by a user terminal that has received the system information block to identify, in an idle state, a paging frame including a timing at which a paging is monitored by an extended DRX (eDRX).

2. A node, comprising a controller configured to execute a process of transmitting a paging to a base station, wherein
the paging includes an extended DRX paging cycle indicating a timing at which a user terminal for which an extended DRX is configured monitors a paging transmitted from the base station, and
the extended DRX paging cycle is notified also to the user terminal.

3. A base station, comprising: a controller configured to execute a process of receiving a paging from an upper node, wherein
the paging includes an extended DRX paging cycle indicating a timing at which a user terminal for which an extended DRX is configured monitors a paging transmitted from the base station,
the extended DRX paging cycle is notified also to the user terminal, and
the controller transmits, based on the extended DRX paging cycle, a paging to the user terminal.

4. A base station, comprising:

a controller configured to determine, based on a system frame number and a DRX cycle, a paging frame for notifying a paging message addressed to a radio terminal, wherein
the system frame number is counted up each time a radio frame passes, and reset to zero at a predetermined value,

the controller manages a value indicating a number of times that the system frame number reaches the predetermined value, and

the controller determines the paging frame, based further on the value indicating the number of times.

5. The base station according to claim 4, wherein the controller determines the paging frame, based on an extended system frame number defined by the value indicating the number of times and the system frame number, and the DRX cycle.

6. The base station according to claim 4, further comprising: a transmitter configured to transmit, by broadcast, the value indicting the number of times to a radio terminal.

7. The base station according to claim 4, further comprising: a receiver configured to receive configuration information on a configuration of the DRX cycle notified from an upper node to a radio terminal and an identifier indicating the radio terminal, from the upper node, wherein

the configuration information includes the value indicating the number of times, and

the controller determines, based on the value indicating the number of times received from the upper node, a paging frame for notifying a paging message addressed to the radio terminal.

8. The base station according to claim 4, further comprising:

a receiver configured to receive, from a radio terminal, a check request for checking a value indicating the number of times managed by the radio terminal; and

a transmitter configured to transmit, to the radio terminal, a response for checking, by the radio terminal, the value indicting the number of times.

9. A radio terminal comprising:

a controller configured to determine, based on a system frame number and a DRX cycle, a paging frame, wherein the system frame number is counted up each time a radio frame passes, and reset to zero at a predetermined value,

the controller manages a value indicating a number of times that the system frame number reaches the predetermined value, and

the controller determines the paging frame, based further on the value indicating the number of times.

10. The radio terminal according to claim 9, wherein the controller determines the paging frame, based on an extended system frame number defined by the value indicating the number of times and the system frame number, and the DRX cycle.

11. The radio terminal according to claim 9, further comprising: a receiver configured to receive the value indicting the number of times by broadcast from a base station.

12. The radio terminal according to claim 9, further comprising: a receiver configured to receive, from an upper node, by a NAS message, configuration information on a configuration of the DRX cycle, wherein

the configuration information includes the value indicating the number of times.

13. The radio terminal according to claim 9, further comprising:

a transmitter configured to transmit, to a base station, a check request for checking a value indicating the number of times managed by the radio terminal; and

a receiver configured to receive, from the base station, a response for checking, by the radio terminal, the value indicting the number of times.

14. A network apparatus being an upper node of a base station configured to manage a cell belonging to a predetermined tracking area, comprising:

a controller configured to determine, based on a system frame number and a DRX cycle, a paging frame, wherein the system frame number is counted up each time a radio frame passes, and reset to zero at a predetermined value,

the controller notifies a radio terminal existing in the cell, of configuration information on a configuration of the DRX cycle,

the configuration information includes a value indicating a number of times that the system frame number reaches the predetermined value, and

the controller notifies the base station of the configuration information and an identifier indicating the radio terminal.

# FIG. 1

## FIG. 2

100

UE

120

USER
INTERFACE

160

PROCESSOR

110

RADIO
TRANSCEIVER

101

130

GNSS
RECEIVER

160'

140

BATTERY

150

MEMORY

## FIG. 3

200

eNB

220

NETWORK
INTERFACE

240

PROCESSOR

210

RADIO
TRANSCEIVER

201

240'

MEMORY ~230

# FIG. 4

# FIG. 5

| UE | eNB | MME |
|---|---|---|
| NAS | | NAS |
| RRC | ← RADIO BEARER → | RRC |
| PDCP | | PDCP |
| RLC | ← LOGICAL CHANNEL → | RLC |
| MAC | ← TRANSPORT CHANNEL → | MAC |
| PHY | ← PHYSICAL CHANNEL → | PHY |

# FIG. 6

1 RADIO FRAME

1 SLOT

| #0 | #1 | #2 | #3 | ······· | #18 | #19 |

1 SUBFRAME

TIME

FIG. 7

UE 100                                      eNB 200

S110
radioFRAMEHEADER

S120
CONFIGURATION

S130
PAGING

# FIG. 8

```
ePCCH-Config ::=                          SEQUENCE {

   PagingCycle                            INTEGER(0.. 8640000)

}




ePCCH-Config ::=                          SEQUENCE {

   radioFrameHeader                       INTEGER(0..8437)

   PagingCycle                            INTEGER(0.. 8640000)

}
```

# FIG. 9

UE 100　　　　　　　　　　eNB 200　　　　　　　　　MME 300

UE_ID　　　　　　　　　　　　　S210

CONFIGURATION　　　　　　　　S220

CONFIGURATION+UE_ID

S230

S240

PAGING

S250
PAGING

## INTERNATIONAL SEARCH REPORT

| International application No. |
|---|
| PCT/JP2016/056437 |

**A. CLASSIFICATION OF SUBJECT MATTER**

*H04W52/02(2009.01)i, H04W68/00(2009.01)i*

According to International Patent Classification (IPC) or to both national classification and IPC

**B. FIELDS SEARCHED**

Minimum documentation searched (classification system followed by classification symbols)
H04B7/24-7/26, H04W4/00-99/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br><br>A | InterDigital Communications, Supporting Extended DRX in RRC_IDLE mode [online], 3GPP TSG-RAN WG2#83, R2-132436, 2013.08.10, Retrieved from the Internet:<URL:http://www.3gpp.org/ftp/tsg_ran/WG2_RL2/TSGR2_83/Docs/R2-132436.zip>, §3.1,3.2 | 2-4,6-9,<br>11-14<br>1,5,10 |
| A | Samsung, Paging enhancement for Rel-13 MTC [online], 3GPP TSG-RAN WG2#89, R2-150502, 2015.01.31, Retrieved from the Internet: <URL:http://www.3gpp.org/ftp/tsg_ran/WG2_RL2/TSGR2_89/Docs/R2-150502.zip> | 1-14 |

☒  Further documents are listed in the continuation of Box C.　　　☐  See patent family annex.

| | |
|---|---|
| *　Special categories of cited documents:<br>"A"　document defining the general state of the art which is not considered　to be of particular relevance<br>"E"　earlier application or patent but published on or after the international filing date<br>"L"　document which may throw doubts on priority claim(s) or which is cited to establish the publication date of another citation or other special reason (as specified)<br>"O"　document referring to an oral disclosure, use, exhibition or other means<br>"P"　document published prior to the international filing date but later than the priority date claimed | "T"　later document published after the international filing date or priority date and not in conflict with the application but cited to understand the principle or theory underlying the invention<br>"X"　document of particular relevance; the claimed invention cannot be considered novel or cannot be considered to involve an inventive step when the document is taken alone<br>"Y"　document of particular relevance; the claimed invention cannot be considered to involve an inventive step when the document is combined with one or more other such documents, such combination being obvious to a person skilled in the art<br>"&"　document member of the same patent family |

| Date of the actual completion of the international search | Date of mailing of the international search report |
|---|---|
| 12 April 2016 (12.04.16) | 26 April 2016 (26.04.16) |

| Name and mailing address of the ISA/<br>Japan Patent Office<br>3-4-3,Kasumigaseki,Chiyoda-ku,<br>Tokyo 100-8915,Japan | Authorized officer<br><br><br>Telephone No. |
|---|---|

Form PCT/ISA/210 (second sheet) (January 2015)

**INTERNATIONAL SEARCH REPORT**

International application No.

PCT/JP2016/056437

C (Continuation). DOCUMENTS CONSIDERED TO BE RELEVANT

| Category* | Citation of document, with indication, where appropriate, of the relevant passages | Relevant to claim No. |
|---|---|---|
| A | Samsung, Enhancements for extended DRX in IDLE [online], 3GPP TSG-RAN WG2#83, R2-132613, 2013.08.10, Retrieved from the Internet:<URL:http://www.3gpp.org/ftp/tsg_ran/WG2_RL2/TSGR2_83/Docs/R2-132613.zip> | 1-14 |
| A | NSN, Nokia Corporation, Further analysis of extended DRX cycle for UEPCOP [online], 3GPP TSG-RAN WG2#83bis, R2-133193, 2013.09.27, Retrieved from the Internet:<URL:http://www.3gpp.org/ftp/tsg_ran/WG2_RL2/TSGR2_83bis/Docs/R2-133193.zip> | 1-14 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015041865 A